# FASCICULE DE BREVET EUROPEEN

(11) **EP 3 265 626 B1**
(45) Date de publication et mention de la délivrance du brevet: **23.01.2019**
(21) Numéro de dépôt: 16714994.7
(22) Date de dépôt: 02.03.2016
(51) Int. Cl.: E04G 3/24, G21C 13/02, G21C 17/00, G21C 19/00, G21D 1/02, E04G 3/26, E04G 3/28, G21C 19/02, E04G 21/12

(54) **PLATEFORME ET PROCÉDÉ DE MODIFICATION DE LA POSITION D'AU MOINS UNE POTENCE DE LEVAGE D'UNE TELLE PLATEFORME**
PLATTFORM UND VERFAHREN ZUR VERÄNDERUNG DER POSITION VON MINDESTENS EINEM HUBBALKEN SOLCH EINER PLATTFORM
PLATFORM AND METHOD FOR MODIFYING THE POSITION OF AT LEAST ONE LIFTING BEAM OF SUCH A PLATFORM

(30) Priorité: 02.03.2015 FR 1551754
(43) Date de publication de la demande: 10.01.2018
(73) Titulaire: X L B V, 95300 Pontoise (FR)
(72) Inventeur: NARDELLI, Alexandre, 33470 Gujan Mestras (FR)
(74) Mandataire: Ipside
(86) Numéro de dépôt international: PCT/FR2016/050476
(87) Numéro de publication internationale: WO 2016/139423

(56) Documents cités:
- EP-A1- 0 451 655
- FR-A1- 2 988 711
- JP-A- S5 869 915
- US-A- 4 235 305

## Description

### Domaine de l'invention

La présente invention vise une plateforme de levage et un procédé de modification de la position d'au moins une potence de levage d'une telle plateforme.

La présente invention s'applique au domaine de la construction et de la maintenance d'enceintes de confinement de centrales d'énergie nucléaire.

Plus particulièrement, la présente invention s'applique au domaine de la mise en oeuvre et de la maintenance de la contrainte de câbles dans les enceintes de confinement de centrales d'énergie nucléaire.

### État de la technique

Les centrales d'énergie nucléaire comportent une enceinte de confinement. Jusqu'à récemment, l'enceinte de confinement comportait un mur intérieur en béton armé précontraint et un mur extérieur en béton armé. La précontrainte des câbles est effectuée à la construction de l'enceinte de confinement. La tension des câbles du béton armé précontraint était donc connue à la construction de l'enceinte de confinement. La tension des câbles de béton armé pouvait être, ponctuellement, contrôlée au moyen d'échafaudage temporaires donnant accès aux câbles à un utilisateur.

Actuellement, l'enceinte de confinement comporte un mur intérieur en béton armé post-contraint et un mur extérieur en béton armé. La post-contrainte des câbles est effectuée à la construction de l'enceinte de confinement et une maintenance de la post-contrainte au long de la durée de vie de l'enceinte de confinement est nécessaire.

Cependant, l'enceinte de confinement a une forme en tronc de cylindre sur une partie et se termine en une partie hémisphérique. Il est donc nécessaire de garantir un accès sécurisé et de façon stable, aux utilisateurs, aux câbles compris dans la partie hémisphérique de l'enceinte de confinement. De plus, le matériel d'entretien de la post-contrainte ayant un poids conséquent, il est nécessaire de transporter ce matériel jusqu'aux câbles de façon sécurisée et stabilisée. Les systèmes actuels ne sont plus adaptés à ces nouvelles méthodes de construction.

L'art antérieur connait la demande de brevet Américain US 4 235 305 A, divulguant une plateforme d'inspection selon le préambule des revendications 1 et 8, la demande de brevet Japonais JP S58 69915 A, la demande de brevet Européen EP 0 451 655 A1 et la demande de brevet Français FR 2 988 711 A1. Aucun des documents cités ci-avant ne permet une détection précise de la position de chaque potence de levage, pour empêcher ou permettre le déplacement de la plateforme de levage selon la position de cette potence de levage.

### Objet de l'invention

La présente invention vise à remédier à tout ou partie de ces inconvénients.

À cet effet, selon un premier aspect, la présente invention vise une plateforme de levage selon la revendication 1 comportant des moyens d'appui sur un rail, la plateforme se déplaçant le long du rail, qui comporte :
- au moins une potence de levage articulée avec la plateforme,
- des moyens de verrouillage d'une position de chaque potence de levage par rapport à la plateforme et
- des moyens de détection de la position de chaque potence de levage.

Grâce à ces dispositions, le rail étant mis en oeuvre à la construction de l'enceinte de confinement, la plateforme est un moyen sécurisé, de transport de matériel et d'accès aux câbles post-contraints. De plus, la plateforme objet de la présente invention verrouille la position de chaque potence de levage transportant le matériel. Un tel verrouillage empêche le matériel et l'enceinte d'entrer en collision et donc d'être détériorés.

Dans des modes de réalisation, la plateforme comporte des moyens de commande du déplacement de la plateforme, la commande du déplacement de la plateforme dépendant de la position de chaque potence de levage détectée.

L'avantage de ces modes de réalisation est d'empêcher le déplacement de la plateforme si les potences ne sont pas dans une position de sécurité et donc non conforme à un déplacement de la plateforme, ou de permettre le déplacement de la plateforme si les potences sont dans une position de sécurité conforme à un déplacement de la plateforme.

Dans des modes de réalisation, les moyens de verrouillage comportent un nombre prédéterminé de positions.

Ces modes de réalisation présentent l'avantage de définir des positions de sécurité au préalable.

Dans des modes de réalisation, les moyens de verrouillage comportent une surface comportant des reliefs concaves, le nombre de reliefs concaves correspondant au moins au nombre prédéterminé de positions, chaque relief correspondant à au moins une position prédéterminée, et un ergot de verrouillage configuré pour s'insérer dans un relief concave.

Grâce à ces dispositions un verrouillage matériel est effectué. Un tel verrouillage peut être en complément par rapport à un verrouillage dû à une commande de maintien en position de la potence de levage, par exemple.

Dans des modes de réalisation, la plateforme objet de la présente invention comporte des moyens de déplacement de la potence de levage modifiant la position d'une potence de levage par rapport à la plateforme.

L'avantage de ces modes de réalisation est de déplacer la potence de levage en commandant la vitesse et l'accélération, tel que le déplacement est effectué en toute sécurité.

Dans des modes de réalisation, les moyens de détection de la position de chaque potence sont des moyens de détection de la position par induction.

De tels moyens de détection permettent une détection précise de la position de chaque potence de levage.

Dans des modes de réalisation, la plateforme et les moyens d'appui sont articulés par au moins un degré de liberté en rotation, qui comporte un dispositif d'asservissement hydraulique comportant :
- au moins un vérin fixé sur la plateforme et les moyens d'appui,
- au moins un distributeur hydraulique alimentant le vérin en fluide hydraulique,
- au moins un inclinomètre transmettant un courant électrique représentatif d'une information d'inclinaison de la plateforme à au moins un automate,
- au moins un automate commandant le distributeur hydraulique en fonction du courant électrique représentatif de l'information d'inclinaison.

Ces modes de réalisation permettent à la plateforme d'être stabilisée dans une position sensiblement horizontale, bien que le rail suive la courbure de l'enceinte de confinement.

Selon un deuxième aspect, la présente invention vise un procédé de modification selon la revendication 8 de la position d'au moins une potence de levage d'une plateforme de levage comportant des moyens d'appuis sur un rail, la plateforme se déplaçant le long du rail, qui comporte les étapes suivantes :
- détection de la position de la potence de levage,
- déverrouillage de moyens de verrouillage d'une position de la potence de levage par rapport à la plateforme,
- déplacement de la potence de levage modifiant la position de la potence de levage par rapport à la plateforme jusqu'à une position parmi un nombre prédéterminé de position et
- verrouillage de moyens de verrouillage d'une position de la potence de levage par rapport à la plateforme.

Les avantages, buts et caractéristiques particuliers du procédé objet de la présente invention étant similaires à ceux de la plateforme objet de la présente invention, ils ne sont pas rappelés ici.

### Brève description des figures

D'autres avantages, buts et caractéristiques particuliers de l'invention ressortiront de la description non-limitative qui suit d'au moins un mode de réalisation particulier une plateforme et une procédé de modification de la position d'au moins une potence de levage d'une telle plateforme, en regard des dessins annexés, dans lesquels :
- la figure 1 représente, schématiquement et en perspective, un premier mode de réalisation particulier d'un mur intérieur d'une enceinte de confinement d'une centrale à énergie nucléaire,
- la figure 2 représente, schématiquement et en perspective, un mode de réalisation particulier d'un ensemble élévateur comportant une plateforme de manutention, qui n'est pas objet de la présente invention, et un dispositif d'asservissement hydraulique,
- la figure 3 représente, schématiquement et en perspective, un mode de réalisation particulier d'une plateforme de levage objet de la présente invention,
- la figure 4 représente, schématiquement, un premier mode de réalisation particulier d'un dispositif d'asservissement hydraulique,
- la figure 5 représente, schématiquement et en perspective, un mode de réalisation particulier d'une potence de levage d'une plateforme objet de la présente invention,
- la figure 6 représente, sous forme de logigramme, des étapes d'un mode de réalisation particulier d'un procédé d'asservissement hydraulique et
- la figure 7 représente, sous forme de logigramme, des étapes d'un mode de réalisation particulier d'un procédé objet de la présente invention.

### Description d'exemples de réalisation de l'invention

On note dès à présent que les figures ne sont pas à l'échelle.

La présente description est donnée à titre non limitatif, chaque caractéristique d'un mode de réalisation pouvant être combinée à toute autre caractéristique de tout autre mode de réalisation de manière avantageuse.

On note que le terme « un » est utilisé au sens « au moins un ».

On définit pour la suite de la description :
- un rail comme étant un profilé métallique servant de guide pour un mouvement en translation, un rail pouvant comporter plusieurs guides et
- un vérin comme étant un dispositif hydraulique comportant deux chambres, les chambres étant définies par des espaces libres entre un piston et un cylindre, le piston pouvant se translater dans le cylindre.

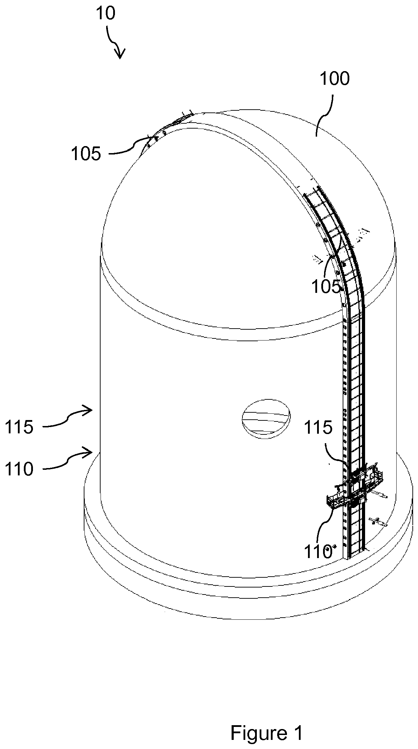

On observe sur la figure 1, un premier mode de réalisation 10 particulier d'un mur intérieur 100 d'une enceinte de confinement d'une centrale à énergie nucléaire.

Le mur intérieur 100 comporte une partie en tronc de cylindre de courbe directrice sensiblement circulaire. On rappelle qu'un cylindre est une surface dans l'espace définie par une droite, appelée génératrice, passant par un point variable décrivant une courbe plane fermée, appelée courbe directrice, et gardant une direction fixe. La partie en tronc de cylindre du mur intérieur 100 est implantée sur le sol et termine le mur intérieur 100.

Le mur intérieur 100 comporte une partie sensiblement hémisphérique, le diamètre de la sphère égal à celui de la courbe directrice du tronc de cylindre. La partie hémisphérique est superposée à la partie cylindrique du mur intérieur 100.

Le mur intérieur 100 comporte une nervure. La nervure est par exemple une proéminence en béton telle une surface rectiligne plane. Les ancrages des câbles de post-contrainte sont noyés dans la nervure.

Le mur intérieur 100 comporte au moins un rail 105, assemblé dans le mur intérieur 100. Le rail 105 suit la courbure du mur intérieur et est placé sur la nervure. Dans des modes de réalisation, le mur intérieur 100 peut comporter un rail 105 allant du sol d'un côté du mur intérieur au sol d'un autre côté diamétralement opposé. Dans des modes de réalisation, le mur intérieur 100 comporte deux rails 105 de positions diamétralement opposés. Préférentiellement, le mur intérieur 100 comporte autant de rails 105 que nécessaire configurés pour desservir chaque ancrage de câble de post-contrainte.

Chaque rail 105 comporte une plateforme 110 dite « plateforme de manutention» et une plateforme 115 dite « plateforme de levage ». Chaque plateforme de manutention 110 est conforme aux normes de sécurité en matière de transport de personnes et de matériel. Chaque plateforme de levage 115 est conforme aux normes de sécurité en matière de machine de levage.

Chaque plateforme, 110 ou 115, comporte des moyens d'appui sur un rail, la plateforme et les moyens d'appui étant articulés par au moins un degré de liberté en rotation.

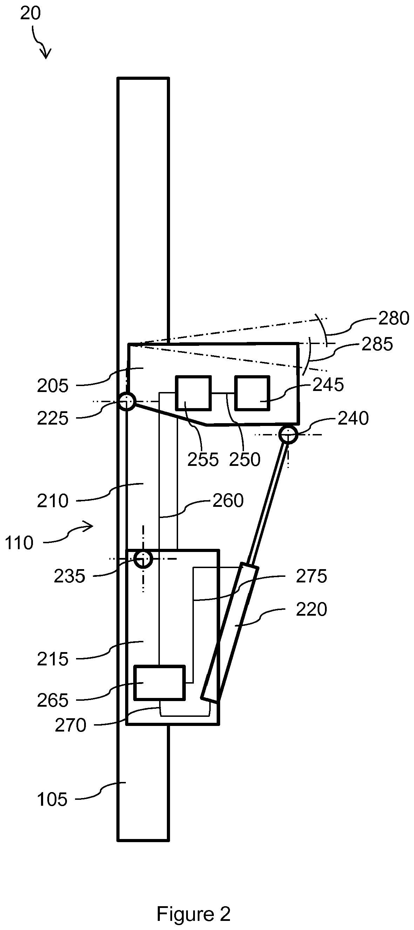

On observe sur la figure 2, un premier mode de réalisation 20 particulier d'une plateforme de manutention 110, qui n'est pas objet de la présente invention.

La plateforme de manutention 110 se déplace le long d'un rail 105. La plateforme de manutention 110 comporte des moyens d'appui 215 sur le rail 105. La plateforme 110 et les moyens d'appui 215 étant articulés par au moins un degré de liberté en rotation.

La plateforme 110 comporte un plateau 205 et un élément de liaison 210. Le plateau est articulé selon au moins degré de liberté en rotation à l'élément de liaison 210 au moyen d'une liaison 225. L'élément de liaison 210 est articulé selon au moins degré de liberté en rotation aux moyens d'appui 215 au moyen d'une liaison 235. Les liaisons 225 et 235 sont préférentiellement des liaisons pivot. La liaisons 225 et 235 sont configurées pour établir au moins un degré de liberté en rotation entre le plateau 205 et les moyens d'appuis 215.

Le plateau 210 est conforme aux règles de sécurité de transport de personnes et de matériel, par exemple, le plateau 205 peut comporter des garde-corps.

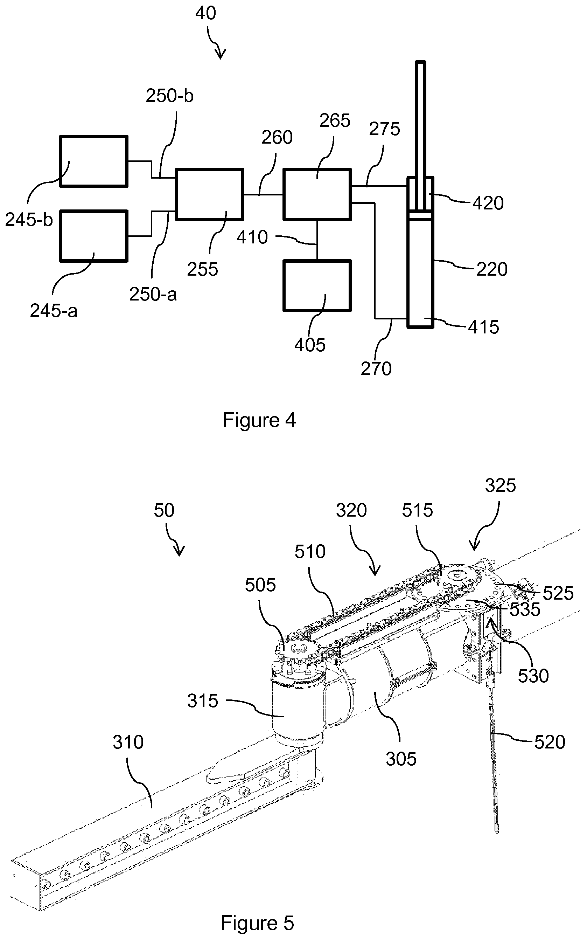

La plateforme 110 est associée à un dispositif d'asservissement hydraulique 40 tel qu'illustré figure 4. Le dispositif d'asservissement hydraulique 40 comporte :
- au moins un vérin 220 fixé sur la plateforme et les moyens d'appui,
- au moins un distributeur hydraulique 265 alimentant le vérin en fluide hydraulique,
- au moins un inclinomètre analogique 245, 245-a transmettant un courant électrique 250, 250-a représentatif d'une information d'inclinaison de la plateforme à au moins un automate 255,
- au moins un automate 255 commandant le distributeur hydraulique 265 configuré pour envoyer une commande électrique 260 d'alimentation d'une chambre du vérin de sorte à maintenir l'inclinaison de la plateforme à l'horizontale.

Le vérin 220 est préférentiellement un vérin double effet. Le corps du vérin 220 est encastré dans les moyens d'appui 235. La tige du vérin 220 est articulée selon au moins un degré de liberté en rotation avec le plateau 205 au moyen d'une liaison 240. Préférentiellement la liaison 240 est une liaison pivot.

Dans des modes de réalisation, le corps du vérin 220 est encastré dans le plateau 205. La tige du vérin 220 est articulée selon au moins un degré de liberté en rotation avec les moyens d'appui 215 au moyen d'une liaison. Préférentiellement la liaison est une liaison pivot.

Les liaisons 225, 235 et 240 sont configurées pour que l'inclinaison du plateau 205 soit sensiblement horizontale lorsque la plateforme 110 est en mouvement sur le rail 105. Préférentiellement, chaque liaison comporte au moins un axe de rotation parallèle à un axe de rotation de toutes les autres liaisons.

Le plateau 205 peut être incliné selon un angle maximum 280 par rapport à l'horizontale en sens antihoraire et un angle maximum 285 par rapport à l'horizontale en sens horaire. Préférentiellement, les angles 280 et 285 sont des angles de cinq degrés. Grâce à ces dispositions, une personne se situant sur le plateau n'est pas déstabilisée et un glissement du matériel situé sur le plateau est évité. De plus, ces dispositions présentent un confort pour l'utilisateur effectuant une opération de manutention.

Le plateau 205 comporte un inclinomètre 245. L'inclinomètre 245 est un inclinomètre analogique. Un inclinomètre analogique transmet un courant électrique 250 dont l'intensité et la tension varient en fonction d'une information d'inclinaison de la plateforme 110 et plus particulièrement du plateau 205 de la plateforme 110.

Dans des modes de réalisation, le plateau 205 peut comporter au moins un inclinomètre TOR (acronyme de « Tout Ou Rien ). Un inclinomètre TOR transmet un courant électrique pouvant avoir deux états en fonction d'une information d'inclinaison de la plateforme 110. Par exemple, l'un des états délivre un courant électrique d'intensité et de tension nulles lorsque l'inclinaison du plateau 205 est inférieure aux angles 280 et 285 et l'autre état délivre un courant électrique d'une intensité et d'une tension de valeurs prédéfinies lorsque l'inclinaison du plateau 205 est supérieure aux angles 280 et 285. Le courant électrique délivré par l'inclinomètre TOR peut, par exemple, entraîner l'arrêt du déplacement de la plateforme 110.

Le courant électrique 250 représentatif d'une information d'inclinaison du plateau 205 émis par l'inclinomètre 245 est transmis à un automate 255.

En fonction du courant électrique 250, l'automate 255 commande le distributeur hydraulique 265 par un signal électrique 260 de commande.

On définit une orientation horizontale telle que l'inclinomètre détecte une inclinaison de zéro degré.

Par exemple, si le courant électrique 250 représente une inclinaison du plateau 205 variation d'inclinaison par rapport à l'horizontale, ou en d'autres termes inférieure ou supérieure à l'horizontale, l'automate 255 envoie une commande électrique 260 d'alimentation 275 d'une chambre du vérin de rétablissement de l'inclinaison de la plateforme. Si l'inclinaison de la plateforme est dans un sens horaire par rapport à l'horizontale et inférieure à l'angle 280, l'automate envoie une commande électrique 260 d'alimentation 275 de la chambre du vérin 220 en fluide hydraulique rentrant le piston du vérin dans le cylindre du vérin 220. Si l'inclinaison de la plateforme est dans un sens anti horaire par rapport à l'horizontale et supérieure à l'angle 285, l'automate envoie une commande électrique 260 d'alimentation 270 de la chambre du vérin 220 en fluide hydraulique sortant le piston du vérin du cylindre du vérin 220. Si le dispositif 40 comporte un inclinomètre TOR, une détection par l'inclinomètre TOR d'une inclinaison supérieure à l'angle 280 ou à l'angle 285, l'automate 255 bloque le déplacement de la plateforme.

Préférentiellement, le distributeur hydraulique 265 est un distributeur comportant cinq orifices et deux positions, aussi connu sous le nom de « distributeur 5/2 », à commande électrique 260.

Préférentiellement, le dispositif 40 comporte un moteur et au moins une pompe alimentant en fluide hydraulique chaque vérin 220, le moteur entraînant la pompe. La pompe est une pompe hydraulique. Le moteur et la pompe permettent une alimentation continue du vérin en fluide hydraulique. Dans des modes de réalisation, le dispositif 40 comporte au moins une pompe pour chaque vérin 220.

Le dispositif d'asservissement hydraulique 40 peut comporter une centrale hydraulique comportant le moteur et la pompe. La centrale hydraulique peut comporter :
- au moins un réservoir à fluide hydraulique,
- au moins un thermostat transmettant à l'automate 255 un courant électrique représentatif d'une information de température du fluide hydraulique,
- au moins un thermoplongeur recevant une commande de l'automate 255 de chauffage du fluide hydraulique à une température prédéterminée en fonction de l'information de température du fluide hydraulique,
- au moins un capteur de niveau de fluide hydraulique envoyant un courant électrique représentatif du niveau de fluide hydraulique à l'automate 255,
- au moins un manomètre indiquant la pression du fluide hydraulique en sortie de la pompe,
- au moins un limiteur de pression dérivant le fluide hydraulique vers le réservoir lorsque la pression du fluide hydraulique dépasse une valeur prédéterminée,
- au moins un limiteur de débit modulaire régulant la vitesse de déplacement du vérin 220, et
- au moins un distributeur hydraulique comportant quatre orifices et trois positions dirigeant le fluide hydraulique.

Préférentiellement, chaque vérin 220 comporte au moins un clapet de sécurité bloquant le mouvement du piston du vérin 220 en cas d'absence de pression du fluide d'hydraulique.

Préférentiellement, pour des raisons de sécurité, la plateforme 110 comporte deux vérins 220, deux distributeurs hydrauliques 265 et une pompe. Les deux vérins 220, les deux distributeurs hydrauliques 265 étant commandées par le même automate 255. Par exemple, si l'un des vérins 220, l'un des distributeurs hydrauliques 265, ou une partie d'un circuit hydraulique entre la pompe, un distributeur hydraulique 265 et un vérin 220, présente une anomalie ou un disfonctionnement, l'autre vérin 220 et l'autre distributeur hydraulique 265 assurent la sécurité des personnes et du matériel. La commande de l'un des deux vérins 220 par un distributeur hydraulique 265 est suffisante pour entraîner l'autre vérin 220 en raison de la rigidité de la plateforme 110. Préférentiellement, le fluide hydraulique est de l'huile.

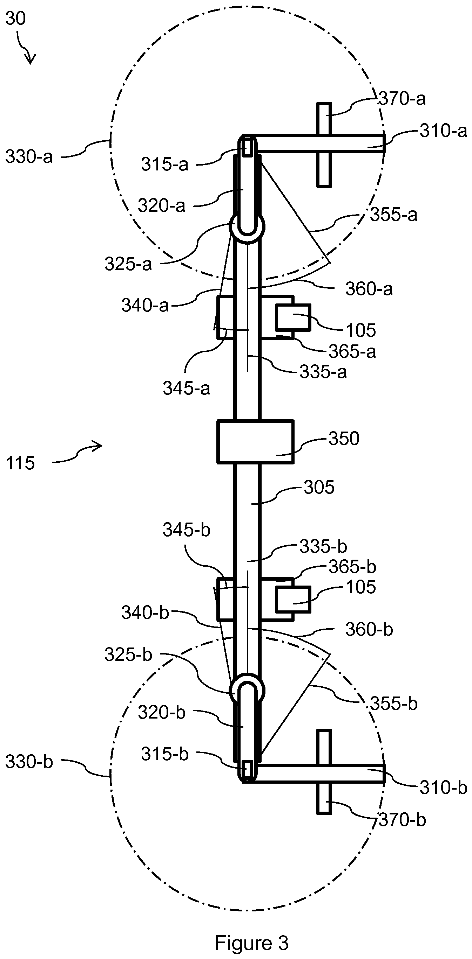

On observe sur la figure 3 un deuxième mode de réalisation particulier 30 d'une plateforme de levage 115.

Dans la description qui suit de la figure 3, deux groupes d'éléments indépendants et similaires sont désignés par une référence numérique et une lettre « a » ou « b ». Les éléments de chaque groupe ayant la même fonction et les mêmes caractéristiques respectives, conservent les mêmes références numériques, la lettre « a » est ajoutée pour l'un des groupes d'éléments et la lettre « b » est ajoutée pour l'autre groupe d'éléments. Par exemple, l'élément 310-a a la même fonction et les mêmes caractéristiques que l'élément 310-b. Dans la description qui suit, seuls les éléments en « a » sont décrits, la description des éléments en « b » étant identique. Les divergences entre les éléments en « a » et les éléments en « b » sont explicitement décrites.

Les groupes d'éléments a et b sont placés chacun à une extrémité de la poutre centrale 305.

La plateforme de levage 115 comporte des moyens d'appui 365-a sur un rail 105, la plateforme 115 se déplaçant le long du rail 105 comporte :
- au moins une potence 310-a de levage articulée avec la plateforme 115,
- des moyens de verrouillage 325-a d'une position de chaque potence 310-a de levage par rapport à la plateforme 115 et
- des moyens de détection 315-a de la position de chaque potence 310-a de levage.

Préférentiellement, la plateforme 115 et notamment au moins une potence, 310-a ou 310-b, transporte au moins un dispositif ou un accessoire de post-contrainte de câbles en acier, servant à l'application d'une post-contrainte. L'articulation de chaque potence 310-a ou 310-b permet à un utilisateur de mettre en place le dispositif ou l'accessoire de post-contrainte afin de pouvoir appliquer la post-contrainte.

La potence 310-a est une poutre articulée selon une liaison pivot avec la plateforme de levage 115. La potence a une longueur entre un mètre et un mètre et demi. Préférentiellement, la longueur de la potence est de mille quatre cent vingt-cinq millimètres. La liaison pivot est préférentiellement proche d'une extrémité de la potence et proche d'une extrémité d'une poutre 305 dite « poutre centrale ». La potence peut être déplacée en rotation autour de la liaison pivot sur trois cent soixante degrés. Le cercle 330-a définit la course possible par un point au centre de l'arrête de l'extrémité de la potence la plus éloignée de la liaison pivot dans le plan perpendiculaire à l'axe de la liaison pivot. L'axe de la liaison pivot est préférentiellement perpendiculaire à un axe 335-a défini selon la plus grande longueur de la poutre centrale 305 et à un axe défini selon la plus grande longueur de la potence 310-a.

Les moyens de détection 315-a de la position de la potence 310-a de levage sont préférentiellement dans l'axe de la liaison pivot. Préférentiellement, les moyens de détection sont des moyens de détection 315-a de la position par induction. Les moyens de détection 315-a détectent une came en acier conductrice par induction. La came en acier est comprise par la potence 310-a de levage. La came en acier est située proche de l'axe de la liaison pivot entre la potence 310-a et la poutre 305.

Dans des modes de réalisation, les moyens de détection 315-a sont un capteur angulaire. Dans des modes de réalisation, les moyens de détection 315-a sont un interrupteur de position à molette. Dans des modes de réalisation, les moyens de détection 315-a sont différents des moyens de détection 315-b.

Les moyens de verrouillage 325-a d'une position de chaque potence 310-a de levage par rapport à la plateforme 115 permettent à un utilisateur de verrouiller la position de la potence de levage pour éviter les mouvements de rotations de la potence 310-a non contrôlés, essentiellement lors d'un déplacement de la plateforme. Dans des modes de réalisation, les moyens de verrouillage sont un frein.

Préférentiellement, les moyens de verrouillage 325-a comportent un nombre prédéterminé de positions, trente positions par exemple. Les moyens de verrouillage 325-a comportent une surface comportant des reliefs concaves, le nombre de reliefs concaves correspondant au moins au nombre de positions prédéterminé, chaque relief concave correspondant à au moins une position prédéterminée, et un ergot de verrouillage configuré pour s'insérer dans un relief concave.

La surface est un disque comportant des reliefs concaves répartis équitablement sur un cercle d'un rayon déterminé sur le disque, préférentiellement concentrique au disque. Par exemple, si les moyens de verrouillage 325-a comportent trente positions prédéterminées, un relief concave sera disposé tous les douze degrés sur un cercle de rayon déterminé. Chaque relief concave est préférentiellement un trou, borgne ou traversant, d'un rayon déterminé.

Préférentiellement, la surface est comportée par des moyens de déplacement de la potence 310-a ou par la potence 310-a. Dans des modes de réalisation, la surface est comportée par la poutre centrale 305.

L'ergot de verrouillage est tel qu'une empreinte de la face supérieure de l'ergot peut être comprise dans l'empreinte de chaque relief concave, préférentiellement avec un jeu faible. L'ergot de verrouillage peut avoir une forme correspondant à la forme de chaque relief concave. L'ergot de verrouillage est préférentiellement un arbre ayant un rayon inférieur ou égal au rayon du relief concave. L'ergot de verrouillage est situé au dessous du rayon comportant les reliefs concaves tel que par une translation de l'ergot de verrouillage dans un axe perpendiculaire à la surface, l'ergot de verrouillage peut s'insérer dans un relief concave pour verrouiller la position de la potence 310-a.

Dans des modes de réalisation, les moyens de verrouillage comportent plusieurs ergots de verrouillage disposés tels que le nombre de positions est multiplié par le nombre d'ergots de verrouillage. Par exemple, dans le cas de trente reliefs concaves, deux ergots de verrouillage décalés de six degrés, sur un cercle concentrique au cercle comportant les reliefs concaves et de même rayon, créent soixante positions de verrouillage.

Préférentiellement, l'ergot de verrouillage est comporté par la poutre centrale 305. Dans des modes de réalisation, l'ergot de verrouillage est comporté par des moyens de déplacement de la potence 310-a ou par la potence 310-a.

Dans des modes de réalisation, les moyens de verrouillage 325-a comportent une surface comportant des reliefs convexes, le nombre de reliefs convexes correspondant au moins au nombre de positions prédéterminé, chaque relief convexe correspondant à au moins une position prédéterminée, et un relief creux de verrouillage, le relief convexe étant configuré pour s'insérer dans un relief creux de verrouillage.

La surface est un disque comportant des reliefs convexes répartis équitablement sur un cercle d'un rayon déterminé sur le disque. Par exemple, si les moyens de verrouillage 325-a comportent trente positions prédéterminées, un relief convexe sera disposé tous les douze degrés sur un cercle de rayon déterminé. Chaque relief convexe est préférentiellement un ergot correspondant au relief creux.

Préférentiellement, la surface est comportée par des moyens de déplacement de la potence 310-a ou par la potence 310-a. Dans des modes de réalisation, la surface est comportée par la poutre centrale 305.

Le relief creux de verrouillage est tel qu'une empreinte de la face supérieure du relief creux peut comprendre l'empreinte de chaque relief convexe, préférentiellement avec un jeu faible. Le relief creux de verrouillage est préférentiellement un alésage dans arbre, l'alésage ayant un rayon supérieur ou égal au rayon du relief convexe et le rayon de l'arbre étant supérieur au rayon de l'alésage. Le relief creux de verrouillage est situé au dessous du rayon comportant les reliefs convexes tel que par une translation du relief creux de verrouillage dans un axe perpendiculaire à la surface, au moins un relief convexe peut s'insérer dans le relief creux de verrouillage pour verrouiller la position de la potence 310-a.

Dans des modes de réalisation, les moyens de verrouillage comportent plusieurs reliefs creux de verrouillage disposés tels que le nombre de positions est multiplié par le nombre de reliefs creux de verrouillage. Par exemple, dans le cas de trente reliefs convexes, deux reliefs creux de verrouillage décalés de six degrés, sur un cercle concentrique au cercle comportant les reliefs convexes et de même rayon, créent soixante positions de verrouillage.

Préférentiellement, le relief creux de verrouillage est comporté par la poutre centrale 305. Dans des modes de réalisation le relief creux de verrouillage est comporté par les moyens de déplacement 320-a de la potence 310-a ou par la potence 310-a.

La plateforme de levage 115 comporte des moyens de déplacement 320-a de la potence 310-a de levage modifiant la position de la potence de levage 310-a par rapport à la plateforme de levage 115.

Les moyens de verrouillage 325-a peuvent être actionnés manuellement ou automatiquement.

Les moyens de déplacement 320-a comportent deux roues dentées et une chaine s'insérant entre les dents des deux roues dentées liant l'une des roues dentées à l'autre roue dentée.

Une roue dentée est fixée à la potence, le centre de la roue dentée étant sur l'axe de la liaison pivot entre la potence 310-a et la poutre centrale 305. L'autre roue dentée est préférentiellement parallèle à la surface des moyens de verrouillage 325-a et tel que le centre de la roue dentée est sur un axe comportant le centre du cercle comportant les reliefs concaves et perpendiculaire à la surface des moyens de verrouillage 325-a.

Les moyens de déplacement 320-a peuvent être actionnés manuellement ou automatiquement.

La potence 310-a peut comporter un treuil 370-a. Le treuil 370-a peut être déplacé manuellement ou automatiquement ou de façon motorisée dans l'axe longitudinal de la potence 310-a. L'axe longitudinal de la potence 310-a étant défini comme un axe perpendiculaire à l'axe de la liaison pivot et selon la longueur de la potence 310-a.

Le treuil 370-a peut comporter une liaison pivot avec la potence 310-a selon un axe parallèle à l'axe de la liaison pivot entre la potence 310-a et la poutre centrale 305.

La plateforme de levage 115 comporte des moyens de commande 350 du déplacement de la plateforme de levage 115, la commande du déplacement de la plateforme 115 dépendant de la position de chaque potence 310-a de levage détectée.

Par exemple, les moyens de commande 350 du déplacement de la plateforme 115 autorisent et/ou commandent le déplacement de la plateforme 115 si l'axe longitudinal de la potence est compris entre un angle 345-a et un angle 360-a, sinon le déplacement de la plateforme 115 est bloqué. Le déplacement de la plateforme 115 est donc impossible si la potence 310-a est déployée.

L'angle 345-a est l'angle entre l'axe 335-a et un axe 340-a. L'axe 340-a est l'axe 335-a après rotation d'un angle de dix degrés dans le sens antihoraire, selon l'axe de la liaison pivot entre la poutre centrale 305 et la potence 310-a, dans un plan perpendiculaire à l'axe de la liaison pivot comportant l'axe 335-a. L'angle 360-a est un angle de dix degrés. L'angle 360-a est l'angle entre l'axe 335-a et un axe 355-a. L'axe 355-a est l'axe 345-a après rotation d'un angle de trente-cinq degrés dans le sens horaire, selon l'axe de la liaison pivot entre la poutre centrale 305 et la potence 310-a, dans un plan perpendiculaire à l'axe de la liaison pivot comportant l'axe 335-a. L'angle 360-a est un angle de trente-cinq degrés.

L'angle 345-b est l'angle entre l'axe 335-b et un axe 340-b. L'axe 340-b est l'axe 335-b après rotation d'un angle de dix degrés dans le sens horaire, selon l'axe de la liaison pivot entre la poutre centrale 305 et la potence 310-b, dans un plan perpendiculaire à l'axe de la liaison pivot comportant l'axe 335-b. L'angle 360-b est un angle de dix degrés. L'angle 360-b est l'angle entre l'axe 335-b et un axe 355-b. L'axe 355-b est l'axe 345-b après rotation d'un angle de trente-cinq degrés dans le sens antihoraire, selon l'axe de la liaison pivot entre la poutre centrale 305 et la potence 310-b, dans un plan perpendiculaire à l'axe de la liaison pivot comportant l'axe 335-b. L'angle 360-b est un angle de trente-cinq degrés.

Dans des modes de réalisation, la plateforme de levage 115 comporte un dispositif d'asservissement hydraulique 40. Dans ces modes de réalisation, tous les éléments comportés par la plateforme 110, décrits à la figure 2, nécessaires à la mise en oeuvre du dispositif d'asservissement hydraulique 40 sont comportés par la plateforme de levage 115. De plus, le plateau 205 de la plateforme 110 est la poutre centrale 305 de la plateforme 15. Les éléments notamment comportés par la plateforme 115 sont les éléments, 210, 215, 220, 230, 235, 240, 245, 250, 255, 260, 265, 270, 275, 280 et 285.

Par exemple, lorsque l'inclinaison de la poutre 305 est supérieure à l'angle 280 ou à l'angle 285, les moyens 325-a de verrouillage permettent de bloquer la potence, et évitent ainsi le déplacement incontrôlé de la potence et sa charge, évitant les risques de collision de la charge avec un mur ou un utilisateur.

Dans des modes de réalisation, l'automate 255 du dispositif d'asservissement hydraulique 40 et les moyens de commande 350 du déplacement de la plateforme sont connectés.

Dans des modes de réalisation, l'automate 255 commande le déplacement de chaque potence 310-a et/ou de chaque treuil 370-a.

Pour effectuer une opération de manutention, un utilisateur déplace la plateforme de levage 115 à la hauteur voulue. Puis l'utilisateur déverrouille les moyens de verrouillage 325-a et déplace la potence 310-a en rotation au moyen des moyens déplacement 320-b jusqu'à la position souhaitée. L'utilisateur peut aussi déplacer le treuil 370-a. L'utilisateur verrouille la position de la potence 310-a avec les moyens de verrouillage 325-a.

Une fois l'opération de manutention effectuée, l'utilisateur doit déverrouiller les moyens de verrouillage 325-a et déplacer la potence 310-a en rotation au moyen des moyens de déplacement 320-b jusqu'à une position entre les angles 345-a et 360-a. L'utilisateur peut aussi déplacer le treuil 370-a. L'utilisateur verrouille la position de la potence 310-a avec les moyens de verrouillage 325-a.

Tant que la position de la potence 310-a détectée par les moyens de détection 315-a n'est pas entre les angles 345-a et 360-a, les moyens de commande 350 bloquent le déplacement de la plateforme.

On observe sur la figure 4 un premier mode de réalisation particulier d'un dispositif d'asservissement hydraulique 40.

Le dispositif d'asservissement hydraulique 40 peut être comporté par une plateforme de manutention 110 et/ou une plateforme de levage 115.

Le dispositif d'asservissement hydraulique 40 comporte :
- au moins un vérin 220 fixé sur la plateforme 110 et les moyens d'appui 215,
- au moins un distributeur hydraulique 265 alimentant le vérin 220 en fluide hydraulique,
- au moins un inclinomètre, 245-a ou 245-b, transmettant un courant électrique 250 représentatif d'une information d'inclinaison de la plateforme à au moins un automate 255,
- au moins un automate 255 commandant le distributeur hydraulique 265 en fonction du courant électrique 250 représentatif de l'information d'inclinaison.

Le vérin 220 est préférentiellement un vérin double effet. Le vérin 220 comporte une chambre 415 et une chambre 420. Lorsque la chambre 415 est alimentée en fluide hydraulique, le piston du vérin 220 sort du cylindre du vérin 220. Lorsque la chambre 420 est alimentée en fluide hydraulique, le piston du vérin 220 rentre dans le cylindre du vérin 220.

Le dispositif d'asservissement hydraulique 40 comporte au moins un inclinomètre 245-a. L'inclinomètre 245-a est un inclinomètre analogique. Un inclinomètre analogique transmet un courant électrique 250-a variant en fonction d'une information d'inclinaison de la plateforme, 110 ou 115.

Le dispositif d'asservissement hydraulique 40 comporte au moins un inclinomètre 245-b, TOR. Un inclinomètre TOR transmet un courant électrique 250-b pouvant avoir deux états en fonction d'une information d'inclinaison de la plateforme, 110 ou 115. Par exemple, l'un des états délivre un courant électrique 250-b d'intensité et de tension nulles lorsque l'inclinaison de la plateforme, 110 ou 115, est inférieure à au moins angle prédéterminé, tel l'angle 280 ou l'angle 285, et l'autre état délivre un courant électrique 250-b d'une intensité et d'une tension de valeurs prédéfinies lorsque l'inclinaison de la plateforme, 110 ou 115, est supérieure à au moins angle prédéterminé, tel l'angle 280 ou l'angle 285. Le courant électrique 245-b délivré par l'inclinomètre analogique peut, par exemple, entraîner l'arrêt du déplacement de la plateforme, 110 ou 115.

Le courant électrique 250-a représentatif d'une information d'inclinaison de la plateforme, 110 ou 115, émis par l'inclinomètre 245-a est transmis à l'automate 255. Le courant électrique 250-b représentatif d'une information d'inclinaison de la plateforme, 110 ou 115, émis par l'inclinomètre 245-b est transmis à l'automate 255.

En fonction du courant électrique 250-a et du courant électrique 250-b, l'automate 255 commande le distributeur hydraulique 265 par un signal électrique 260 de commande. L'information représentée par le courant électrique 250-b est prioritaire sur l'information représentée par le courant électrique 250-a. Par exemple, lorsque le courant électrique 250-b est représentatif de l'inclinaison de la plateforme, 110 ou 115, est supérieure à au moins un angle prédéterminé, tel l'angle 280 ou l'angle 285, le déplacement de la plateforme 110 ou 115 est arrêté.

Par exemple, lorsque le courant électrique 250-b représentatif de l'inclinaison de la plateforme, 110 ou 115, est inférieur à au moins un angle prédéterminé, tel l'angle 280 ou l'angle 285 et :
- si le courant électrique 250-a représente une inclinaison du plateau 205 dans le sens antihoraire par rapport à l'horizontale, l'automate envoie une commande électrique 260 d'alimentation 275 de la chambre 420 du vérin 220 en fluide hydraulique,
- si le courant électrique 250-a représente une inclinaison du plateau 205 dans le sens horaire par rapport à l'horizontale, l'automate envoie une commande électrique 260 d'alimentation 270 de la chambre 415 du vérin 220 en fluide hydraulique et
- si le courant électrique représente une inclinaison sensiblement horizontale, la commande électrique 260 d'alimentation 270 en fluide hydraulique du vérin 220 est telle que la position du distributeur hydraulique 265 reste inchangée.

Préférentiellement, le distributeur hydraulique 265 est un distributeur comportant cinq orifices et deux positions, aussi connu sous le nom de « distributeur 5/2 », à commande électrique 260.

Préférentiellement, le dispositif 40 comporte un moteur et au moins une pompe alimentant en fluide hydraulique chaque vérin 220, le moteur entraînant la pompe. La pompe est une pompe hydraulique. Le moteur et la pompe permettent une alimentation continue du vérin en fluide hydraulique. Dans des modes de réalisation, le dispositif 40 comporte au moins une pompe pour chaque vérin 220.

La centrale hydraulique 405 peut comporter :
- au moins un réservoir à fluide hydraulique,
- au moins un thermostat transmettant à l'automate 255 un courant électrique représentatif d'une information de température du fluide hydraulique,
- au moins un thermoplongeur recevant une commande de l'automate 255 de chauffage du fluide hydraulique à un température prédéterminée en fonction de l'information de température du fluide hydraulique,
- au moins un capteur de niveau de fluide hydraulique envoyant un courant électrique représentatif du niveau de fluide hydraulique à l'automate 255,
- au moins un manomètre indiquant le pression du fluide hydraulique en sortie de chaque pompe,
- au moins un limiteur de pression dérivant le fluide hydraulique vers le réservoir lorsque la pression du fluide hydraulique dépasse une valeur prédéterminée,
- au moins un limiteur de débit modulaire régulant la vitesse de déplacement du vérin 220 et
- au moins un distributeur hydraulique comportant quatre orifices et trois positions dirigeant le fluide hydraulique.

Préférentiellement, chaque vérin 220 comporte au moins un clapet de sécurité bloquant le mouvement du piston du vérin 220 en cas d'absence de pression du fluide d'hydraulique.

Préférentiellement, pour des raisons de sécurité, le dispositif d'asservissement hydraulique 40 comporte deux vérins 220, deux distributeurs hydrauliques 265 et une pompe. Les deux vérins 220, deux distributeurs hydrauliques 265 étant commandées par le même automate 255. Par exemple, si l'un des vérins 220, l'un des distributeurs hydrauliques 265 ou une partie d'un circuit hydraulique 410 entre la pompe, un distributeur hydraulique 265 et un vérin 220, présente une anomalie ou un disfonctionnement, l'autre vérin 220 et l'autre distributeur hydraulique 265 assurent la sécurité des personnes et du matériel. La commande de l'un des deux vérins 220 par un distributeur hydraulique 265 est suffisante pour entraîner l'autre vérin 220 en raison de la rigidité de la plateforme 110.

Préférentiellement, le fluide hydraulique est de l'huile.

On observe sur la figure 5 un mode de réalisation particulier 50 d'une potence de levage d'une plateforme de levage objet de la présente invention,

Dans la description qui suit de la figure 5, les éléments similaires aux éléments référencés par une lettre « a » ou « b », dans la description de la figure 3, conservent les mêmes références numériques auxquelles la lettre « a » ou « b » est supprimée. Le mode de réalisation 50 peut concerner les deux groupes d'éléments similaires référencés ci-avant par une lettre « a » ou une lettre « b ». Par exemple, l'élément 505 peut être comporté indifféremment par l'élément 320-a ou 320-b. Et l'élément 320 désigne indifféremment l'élément 320-a ou 320-b.

La plateforme de levage comporte des moyens d'appuis sur un rail, la plateforme se déplaçant le long du rail comporte :
- au moins une potence 310 de levage articulée avec la plateforme,
- des moyens de verrouillage 325 d'une position de chaque potence 310 de levage par rapport à la plateforme et
- des moyens de détection 315 de la position de chaque potence 310 de levage.

La potence 310 est une poutre articulée selon une liaison pivot avec la plateforme. La potence a une longueur entre un mètre et un mètre et demi. Préférentiellement, la longueur de la potence est de mille quatre cent vingt-cinq millimètres. La liaison pivot est préférentiellement proche d'une extrémité de la potence et proche d'une extrémité d'une poutre 305 dite « poutre centrale ». La potence peut être déplacée en rotation autour de la liaison pivot sur trois cent soixante degrés.

Les moyens de détection 315 de la position de la potence 310 de levage sont préférentiellement dans l'axe de la liaison pivot. Préférentiellement, les moyens de détection sont des moyens de détection 315 de la position par induction. Les moyens de détection 315 détectent une came en acier conductrice par induction. La came en acier est comprise par la potence 310 de levage. La came en acier est située proche de l'axe de la liaison pivot entre la potence 310 et la poutre 305.

Dans des modes de réalisation, les moyens de détection 315 sont un capteur angulaire. Dans des modes de réalisation, les moyens de détection 315 sont un interrupteur de position à molette.

Les moyens de verrouillage 325 d'une position de chaque potence 310 de levage par rapport à la plateforme permettent à un utilisateur de verrouiller la position de la potence de levage pour effectuer des opérations de maintenance par exemple. Dans des modes de réalisation, les moyens de verrouillage 325 sont un frein.

Préférentiellement, les moyens de verrouillage 325 comportent un nombre prédéterminé de positions, trente positions par exemple. Les moyens de verrouillage 325 comportent une surface 535 comportant des reliefs concaves 525, le nombre de reliefs concaves 525 correspondant au moins au nombre de positions prédéterminé, chaque relief concave 525 correspondant à au moins une position prédéterminée, et un ergot 530 de verrouillage configuré pour s'insérer dans un relief concave 525.

La surface 535 est un disque comportant des reliefs concaves 525 répartis équitablement sur un cercle d'un rayon déterminé sur le disque, préférentiellement concentrique au disque. Par exemple, si les moyens de verrouillage 325 comportent trente positions prédéterminées, un relief concave 525 sera disposé tous les douze degrés sur un cercle de rayon déterminé. Chaque relief concave 525 est préférentiellement un trou, borgne ou traversant, d'un rayon déterminé.

Préférentiellement, la surface 535 est comportée par des moyens de déplacement 320 de la potence 310 ou par la potence 310. Dans des modes de réalisation, la surface 535 est comportée par la poutre centrale 305.

L'ergot de verrouillage 530 est tel qu'une empreinte de la face supérieure de l'ergot de verrouillage 530 peut être comprise dans l'empreinte de chaque relief concave 525, préférentiellement avec un jeu faible. L'ergot de verrouillage 530 peut avoir une forme correspondant à la forme de chaque relief concave 525. L'ergot de verrouillage 530 est préférentiellement un arbre ayant un rayon inférieur ou égal au rayon du relief concave 525. L'ergot de verrouillage 530 est situé au dessous du rayon comportant les reliefs concaves 525 tel que par une translation de l'ergot de verrouillage 530 dans un axe perpendiculaire à la surface, l'ergot de verrouillage 530 peut s'insérer dans un relief concave 525 pour verrouiller la position de la potence 310.

Dans des modes de réalisation, les moyens de verrouillage 325 comportent plusieurs ergots de verrouillage 530 disposés tels que le nombre de positions est multiplié par le nombre d'ergots de verrouillage 530. Par exemple, dans le cas de trente reliefs concaves 525, deux ergots de verrouillage 530 décalés de six degrés, sur un cercle concentrique au cercle comportant les reliefs concaves 525 et de même rayon, créent soixante positions de verrouillage.

Préférentiellement, l'ergot de verrouillage 530 est comporté par la poutre centrale 305. Dans des modes de réalisation, l'ergot de verrouillage 530 est comporté par les moyens de déplacement 320 de la potence 310 ou par la potence 310.

Dans des modes de réalisation, les moyens de verrouillage 325 comportent une surface comportant des reliefs convexes, le nombre de reliefs convexes correspondant au moins au nombre de positions prédéterminé, chaque relief convexe correspondant à au moins une position prédéterminée, et un relief creux de verrouillage, le relief convexe étant configuré pour s'insérer dans un relief creux de verrouillage.

La surface est un disque comportant des reliefs convexes répartis équitablement sur un cercle d'un rayon déterminé sur le disque. Par exemple, si les moyens de verrouillage 325 comportent trente positions prédéterminées, un relief convexe sera disposé tous les douze degrés sur un cercle de rayon déterminé. Chaque relief convexe est préférentiellement ergot correspondant au relief creux.

Préférentiellement, la surface est comportée par des moyens de déplacement de la potence 310 ou par la potence 310. Dans des modes de réalisation, la surface est comportée par la poutre centrale 305.

Le relief creux de verrouillage est tel qu'une empreinte de la face supérieure du relief creux peut comprendre l'empreinte de chaque relief convexe, préférentiellement avec un jeu faible. Le relief creux de verrouillage est préférentiellement un alésage dans arbre, l'alésage ayant un rayon supérieur ou égal au rayon du relief convexe et le rayon de l'arbre étant supérieur au rayon de l'alésage. Le relief creux de verrouillage est situé au dessous du rayon comportant les reliefs convexes tel que par une translation de le relief creux de verrouillage dans un axe perpendiculaire à la surface, au moins un relief convexe peut s'insérer dans le relief creux de verrouillage pour verrouiller la position de la potence 310.

Dans des modes de réalisation, les moyens de verrouillage comportent plusieurs reliefs creux de verrouillage disposés tels que le nombre de positions est multiplié par le nombre de reliefs creux de verrouillage. Par exemple, dans le cas de trente reliefs creux, deux reliefs creux de verrouillage décalés de six degrés, sur un cercle concentrique au cercle comportant les reliefs convexes et de même rayon, créent soixante positions de verrouillage.

Préférentiellement, le relief creux de verrouillage est comporté par la poutre centrale 305. Dans des modes de réalisation, le relief creux de verrouillage est comporté par les moyens de déplacement 320 de la potence 310 ou par la potence 310.

La plateforme comporte des moyens de déplacement 320 de la potence 310 de levage modifiant la position de la potence de levage 310 par rapport à la plateforme.

Les moyens de verrouillage 325 peuvent être actionnés manuellement ou automatiquement au moyen d'un chaine 520. La chaine 520 pouvant être entrainée par un moteur (non représenté).

Les moyens de déplacement 320 comportent deux roues dentées, 515 et 505, et une chaine 510 s'insérant entre les dents des deux roues dentées, 515 et 505, liant l'une des roues dentées 515 à l'autre roue dentée 505.

Une roue dentée 505 est fixée à la potence, le centre de la roue dentée 505 étant sur l'axe de la liaison pivot entre la potence 310 et la poutre centrale 305. L'autre roue dentée 515 est préférentiellement parallèle à la surface des moyens de verrouillage 325 et tel que le centre de la roue dentée 515 est sur un axe comportant le centre du cercle comportant les reliefs concaves et perpendiculaires à la surface des moyens de verrouillage 325.

Les moyens de déplacement 320 peuvent être actionnés manuellement ou automatiquement.

La potence 310 peut comporter un treuil (non représenté). Le treuil (non représenté) peut être déplacé manuellement ou automatiquement dans l'axe longitudinal de la potence 310. L'axe longitudinal de la potence 310 étant défini comme un axe perpendiculaire à l'axe de la liaison pivot et selon la longueur de la potence 310.

Le treuil (non représenté) peut comporter une liaison pivot avec la potence 310 selon un axe parallèle à l'axe de la liaison pivot entre la potence 310 et la poutre centrale 305.

Dans des modes de réalisation la plateforme comporte un dispositif d'asservissement hydraulique 40.

Dans des modes de réalisation, l'automate 255 commande le déplacement de chaque potence 310 et/ou de chaque treuil (non représenté).

Pour effectuer une opération de manutention, un utilisateur déplace la plateforme à la hauteur voulue. Puis l'utilisateur déverrouille les moyens de verrouillage 325 et déplacer la potence 310 en rotation au moyen des moyens déplacement 320 jusqu'à la position souhaitée. L'utilisateur peut aussi déplacer le treuil (non représenté). L'utilisateur verrouille la position de la potence 310 avec les moyens de verrouillage 325.

Une fois l'opération de manutention effectuée, l'utilisateur doit déverrouiller les moyens de verrouillage 325 et déplace la potence 310 en rotation au moyen des moyens de déplacement 320 jusqu'à une position entre les angles 345 et 360. L'utilisateur peut aussi déplacer le treuil (non représenté). L'utilisateur verrouille la position de la potence 310 avec les moyens de verrouillage 325.

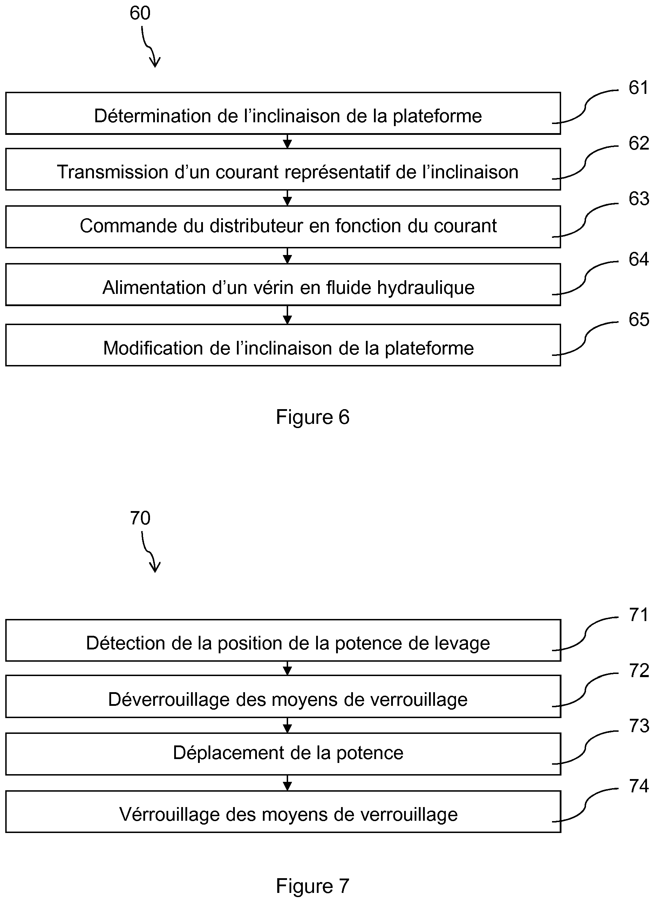

On observe sur la figure 6 des étapes d'un mode de réalisation particulier 60 d'un procédé d'asservissement hydraulique.

Le procédé d'asservissement hydraulique 60 d'une plateforme, 110 ou 115, comportant des moyens d'appui, 215, 305-a ou 305-b, sur un rail, 105, la plateforme, 110 ou 115, et les moyens d'appui, 215, 305-a ou 305-b, étant articulés par au moins un degré de liberté en rotation, et un dispositif d'asservissement hydraulique 40 comporte les étapes suivantes :
- détermination 61 de l'inclinaison de la plateforme, 110 ou 115, par un inclinomètre, 245, 245-a ou 245-b,
- transmission 62 par l'inclinomètre, 245, 245-a ou 245-b, d'un courant électrique, 250, 250-a ou 250-b, représentatif d'une information d'inclinaison de la plateforme, 110 ou 115, à au moins un automate 255,
- commande 63 par l'au moins un automate 255 d'au moins un distributeur hydraulique 265 en fonction du courant électrique, 250, 250-a ou 250-b, représentatif d'une information de l'inclinaison,
- alimentation 64 d'au moins un vérin 220 en fluide hydraulique en fonction de la commande 260,
- modification 65 de l'inclinaison de la plateforme, 110 ou 115, par l'au moins un vérin 220.

Le procédé d'asservissement hydraulique 60 est mis en oeuvre par un dispositif d'asservissement hydraulique 40 comporté par une plateforme de manutention 110 ou une plateforme de levage 115.

L'inclinaison de la plateforme, 110 ou 115, est déterminée au cours de l'étape de détermination 61 par un inclinomètre 245, 245-a ou 245-b. La détermination 61 de l'inclinaison de la plateforme est préférentiellement un signal analogique représentatif d'une information d'inclinaison de la plateforme, 110 ou 115.

L'étape de détermination 61 de l'inclinaison de la plateforme peut comporter une détermination d'une inclinaison trop importante de la plateforme au moyen d'un inclinomètre 245-b TOR. Un inclinomètre TOR est un inclinomètre transmettant, au cours de l'étape 62, un courant électrique 250b pouvant avoir deux états en fonction d'une information d'inclinaison de la plateforme, 110 ou 115. Par exemple, la détermination d'un fonctionnement normal de la plateforme, 110 ou 115, dépend d'un courant électrique 250b d'intensité et de tension nulles délivré lorsque l'inclinaison de la plateforme, 110 ou 115, est inférieure à au moins angle prédéterminé, tel l'angle 280 ou l'angle 285. La détermination d'un fonctionnement anormal de la plateforme, 110 ou 115, dépend d'un courant électrique 250b d'une intensité et d'une tension de valeurs prédéfinies lorsque l'inclinaison de la plateforme, 110 ou 115, est supérieure à au moins angle prédéterminé, tel l'angle 280 ou l'angle 285. Le courant électrique 245-b délivré par l'inclinomètre TOR peut, par exemple, entraîner l'arrêt du déplacement de la plateforme, 110 ou 115 tant que l'inclinaison n'est pas entre l'angle 280 et l'angle 285.

Une fois la détermination 61 une transmission 62 par l'inclinomètre, 245, 245-a ou 245-b, d'un courant électrique, 250, 250-a ou 250-b, représentatif d'une information d'inclinaison de la plateforme, 110 ou 115, à au moins un automate 255 est effectuée.

Le courant électrique 250-a représentatif d'une information d'inclinaison de la plateforme, 110 ou 115, émis par l'inclinomètre 245 est transmis à l'automate 255. Le courant électrique 250-b représentatif d'une information d'inclinaison de la plateforme, 110 ou 115, émis par l'inclinomètre 245 est transmis à l'automate 255.

L'automate 255 commande 63 au moins un distributeur hydraulique 265 en fonction du courant électrique, 250, 250-a ou 250-b, représentatif d'une information de l'inclinaison.

L'information représentée par le courant électrique 250-b est prioritaire sur l'information représentée par le courant électrique 250-a. Par exemple, lorsque le courant électrique 250-b est représentatif de l'inclinaison de la plateforme, 110 ou 115, est supérieure à au moins angle prédéterminé, tel l'angle 280 ou l'angle 285, l'automate 255 bloque le déplacement de la plateforme, 110 ou 115 et envoie une commande 63 au distributeur de rétablissement de l'inclinaison de la plateforme, 110 ou 115. Le procédé rétablissement de l'inclinaison de la plateforme, 110 ou 115, peut comporter les étapes suivantes :
- insertion, par l'utilisateur, d'une clé dans un poste de commande comporté par la plateforme et connecté à l'automate 255,
- activation d'un commutateur dit commutateur « hors course d'inclinaison » par impulsions,
- commande d'alimentation du distributeur 265 par l'automate en fonction des impulsions, jusqu'à ce que l'inclinomètre TOR 245-b détermine un fonctionnement normal de la plateforme,
- reprise du procédé 60 d'asservissement hydraulique de la plateforme.

L'étape d'alimentation 64 d'au moins un vérin 220 en fluide hydraulique est en fonction de la commande 260.

Lorsque le courant électrique 250-b représentatif de l'inclinaison de la plateforme, 110 ou 115, est inférieure à au moins angle prédéterminé, tel l'angle 280 ou l'angle 285 et :
- si le courant électrique 250-a représente une inclinaison du plateau 205 dans le sens antihoraire, l'automate envoie une commande électrique 260 d'alimentation 275 de la chambre 420 du vérin 220 en fluide hydraulique,
- si le courant électrique 250-a représente une inclinaison du plateau 205 dans le sens horaire, l'automate envoie une commande électrique 260 d'alimentation 270 de la chambre 415 du vérin 220 en fluide hydraulique et
- si le courant électrique représente une inclinaison sensiblement horizontale, la commande électrique 260 d'alimentation 270 en fluide hydraulique du vérin 220 est telle que la position du distributeur hydraulique 265 reste inchangée.

L'étape de modification 65 de l'inclinaison de la plateforme, 110 ou 115, est mise en oeuvre par l'au moins un vérin 220 dont le piston se déplace en fonction de l'alimentation en fluide hydraulique d'au moins une des chambres 415 ou 420 du vérin 220.

Le vérin 220 est préférentiellement un vérin double effet. Le vérin 220 comporte une chambre 415 et une chambre 420. Lorsque la chambre 415 est alimentée en fluide hydraulique, le piston du vérin 220 sort du cylindre du vérin 220. Lorsque la chambre 420 est alimentée en fluide hydraulique, le piston du vérin 220 rentre dans le cylindre du vérin 220.

Dans des modes de réalisation, le procédé 60 d'asservissement hydraulique comporte au moins l'une des étapes suivantes :
- alimentation en courant électrique d'un moteur entrainant au moins une pompe,
- alimentation en fluide hydraulique un vérin 220 en fonction de l'étape de commande 63 et de la position du distributeur hydraulique 265 par au moins une pompe entrainée par le moteur,
- détection du niveau de fluide hydraulique par un capteur de niveau envoyant à l'automate 255 un courant électrique représentatif d'une information de niveau de fluide hydraulique,
- capture de la température du fluide hydraulique par au moins un thermostat transmettant à l'automate 255 un courant électrique représentatif d'une information de température du fluide hydraulique,
- modification de la température du fluide hydraulique par au moins un thermoplongeur recevant une commande de l'automate 255 de chauffage du fluide hydraulique à un température prédéterminée en fonction de l'information de température du fluide hydraulique,
- détection de la pression du fluide hydraulique par au moins un manomètre indiquant le pression du fluide hydraulique en sortie de chaque pompe,
- limitation de la pression du fluide hydraulique par au moins un limiteur de pression dérivant le fluide hydraulique vers le réservoir lorsque la pression du fluide hydraulique dépasse une valeur prédéterminée,
- limitation d'un débit par au moins un limiteur de débit modulaire régulant la vitesse de déplacement du vérin,
- direction du fluide hydraulique par au moins un distributeur hydraulique comportant quatre orifices et trois positions,
- affichage de le température du fluide hydraulique et/ou de la pression du fluide hydraulique et/ou du niveau de fluide hydraulique.

Préférentiellement, pour des raisons de sécurité, le dispositif d'asservissement hydraulique 40 comporte deux vérins 220, deux distributeurs hydrauliques 265 et une pompe. Les deux vérins 220, deux distributeurs hydrauliques 265 étant commandées par le même automate 255. Par exemple, si l'un des vérins 220, l'un des distributeurs hydrauliques 265, ou une partie d'un circuit hydraulique 410 entre une pompe, un distributeur hydraulique 265 et un vérin 220, présente une anomalie ou un dysfonctionnement, l'autre vérin 220 et l'autre distributeur hydraulique 265 assurent la sécurité des personnes et du matériel. La commande de l'un des deux vérins 220 par un distributeur hydraulique 265 est suffisante pour entraîner l'autre vérin 220 en raison de la rigidité de la plateforme 110. Les étapes de commande 63, d'alimentation 64 et de modification de l'inclinaison 65 du procédé 60 d'asservissement hydraulique sont indépendantes pour chaque circuit hydraulique 410.

Préférentiellement, afin d'ajuster constamment l'inclinaison de la plateforme, 110 ou 115, le procédé 60 est mis en oeuvre en continu.

On observe sur la figure 7 des étapes d'un mode de réalisation particulier 70 d'un procédé objet de la présente invention.

Le procédé 70 de modification de la position d'au moins une potence 310-a ou 310-b de levage d'une plateforme de levage 115 comportant des moyens d'appui, 365-a et 365-b sur un rail 105, la plateforme 115 se déplaçant le long du rail 105, comporte les étapes suivantes :
- détection 71 de la position de la potence, 310-a ou 310-b de levage,
- déverrouillage 72 de moyens de verrouillage, 325-a ou 325-b, d'une position de la potence, 310-a ou 310-b, de levage par rapport à la plateforme 115,
- déplacement 73 de la potence, 310-a ou 310-b, de levage modifiant la position de la potence, 310-a ou 310b, de levage par rapport à la plateforme 115 jusqu'à une position parmi un nombre prédéterminé de positions et
- verrouillage 74 de moyens de verrouillage, 325-a ou 325-b, d'une position de la potence, 310-a ou 310-b, de levage par rapport à la plateforme 115.

L'étape de détection 71 de la position de la potence, 310-a ou 310-b de levage est mise en oeuvre par les moyens de détections 315-a ou 315-b. La position détecté est transmise continuellement aux moyens de commande 350 du déplacement de la plateforme 115.

Pour effectuer une opération de manutention, un utilisateur déplace la plateforme de levage 115 à la hauteur voulue. Puis l'utilisateur procède au déverrouillage 72 des moyens de verrouillage, 325-a ou 325-b. Le déverrouillage 72 est réalisé par l'actionnement de la chaine 520 translatant l'ergot de verrouillage 530. Les moyens de verrouillage, 325-a ou 325-b, sont déverrouillés lorsque l'ergot de verrouillage 530 est entièrement sorti d'un relief concave 525. En d'autres termes, lorsqu'un plan défini par la surface 535 et chaque surface de l'ergot de verrouillage 530 sont entièrement disjoints.

Dans des modes de réalisation, le déverrouillage 72 est réalisé par l'actionnement de la chaine 520 translatant le relief creux de verrouillage. Les moyens de verrouillage, 325-a ou 325-b, sont déverrouillés lorsque chaque relief convexe est entièrement sorti du relief creux de verrouillage. En d'autres termes, lorsqu'un plan défini par le bout des reliefs convexes et chaque surface de l'ergot de verrouillage 530 sont entièrement disjoints.

L'utilisateur procède au déplacement 73 de la potence, 310-a ou 310-b, en rotation au moyen des moyens de déplacement, 320-a ou 320-b, jusqu'à la position souhaitée. Le déplacement 73 peut être commandé par l'utilisateur au moyen des moyens de déplacement, 320-a ou 320-b. La commande du déplacement des moyens de déplacement, 320-a ou 320-b, peut être manuelle ou automatisée.

L'utilisateur peut aussi déplacer le treuil, 370-a. ou 370-b. Le déplacement peut être commandé par l'utilisateur. La commande du déplacement du treuil peut être manuelle ou automatisée.

L'utilisateur verrouille la position de la potence, 310-a ou 310-b, avec les moyens de verrouillage, 325-a ou 325-b. Le verrouillage 74 est réalisé par l'actionnement de la chaine 520 translatant l'ergot de verrouillage 530. Les moyens de verrouillage, 325-a ou 325-b, sont déverrouillés lorsque l'ergot de verrouillage 530 est au moins partiellement entré dans un relief concave 525. En d'autres termes, lorsqu'un plan défini par la surface 535 et au moins une surface de l'ergot de verrouillage 530 sont séquents.

Dans des modes de réalisation, le verrouillage 74 est réalisé par l'actionnement de la chaine 520 translatant le relief creux de verrouillage. Les moyens de verrouillage, 325-a ou 325-b, sont verrouillés lorsqu'au moins un relief convexe est partiellement entré dans le relief creux de verrouillage. En d'autres termes, lorsqu'un plan défini par le bout des reliefs convexes et au moins surface de l'ergot de verrouillage 530 sont séquents

Une fois l'opération de manutention effectuée, l'utilisateur doit remettre en oeuvre le procédé 70 de modification de la position d'au moins une potence, 310-a ou 310-b, de levage jusqu'à une position entre les angles, 345-a et 360-a, ou 345-b et 360-b.

Tant que la position de la potence 310-a détectée par les moyens de détection 315-a n'est pas entre les angles 345-a et 360-a, les moyens de commande 350 bloquent le déplacement de la plateforme de levage 115. Tant que la position de la potence 310-b détectée par les moyens de détection 315-b n'est pas entre les angles 345-b et 360-b, les moyens de commande 350 bloquent le déplacement de la plateforme de levage 115.

## Revendications

1. Plateforme de levage (115) apte à se déplacer le long d'un rail, et comportant des moyens d'appui (365-a, 365-b) pour être installés sur ledit rail (105), et au moins une potence (310, 310-a, 310-b) de levage articulée avec la plateforme, **caractérisée en ce que** ladite plateforme comporte:
- des moyens de verrouillage (325, 325-a, 325-b) d'une position de chaque potence de levage par rapport à la plateforme, et
- des moyens de détection (315, 315-a, 315-b) de la position de chaque potence de levage.

2. Plateforme (115) selon la revendication 1, qui comporte des moyens de commande (350) du déplacement de la plateforme, la commande du déplacement de la plateforme dépendant de la position de chaque potence (310, 310-a, 310-b) de levage détectée.

3. Plateforme (115) selon l'une des revendications 1 ou 2, dans laquelle les moyens de verrouillage (325, 325-a, 325-b) comportent un nombre prédéterminé de positions.

4. Plateforme (115) selon la revendication 3, dans laquelle les moyens de verrouillage (325, 325-a, 325-b) comportent une surface (535) comportant des reliefs concaves (525), le nombre de reliefs concaves correspondant au moins au nombre de prédéterminée de positions, chaque relief correspondant à au moins une position prédéterminée, et un ergot (530) de verrouillage configuré pour s'insérer dans un relief concave.

5. Plateforme (115) selon l'une des revendications 1 à 4, qui comporte des moyens de déplacement (320, 320-a, 320-b) de la potence (310, 310-a, 310-b) de levage modifiant la position d'une potence de levage par rapport à la plateforme.

6. Plateforme (115) selon l'une des revendications 1 à 5, dans laquelle les moyens de détection (315, 315-a, 315-b) de la position de chaque potence (310, 310-a, 310-b) sont des moyens de détection de la position par induction.

7. Plateforme (115) selon l'une des revendications 1 à 6, dans laquelle la plateforme et les moyens d'appui (365-a, 365-b) sont articulés par au moins un degré de liberté en rotation, qui comporte un dispositif d'asservissement hydraulique (40) comportant :
- au moins un vérin (220) fixé sur la plateforme et les moyens d'appui,
- au moins un distributeur hydraulique (265) alimentant le vérin en fluide hydraulique,
- au moins un inclinomètre (245, 245-a, 245-b) transmettant un courant électrique (250) représentatif d'une information d'inclinaison de la plateforme à au moins un automate (255),
- au moins un automate (255) commandant le distributeur hydraulique en fonction du courant électrique représentatif de l'information d'inclinaison.

8. Procédé (70) de modification de la position d'au moins une potence (310, 310-a, 310-b) de levage d'une plateforme de levage comportant des moyens d'appui (365-a, 365-b) sur un rail (105), la plateforme se déplaçant le long du rail, **caractérisé en ce qu'**il comporte les étapes suivantes :
- détection (71) de la position de la potence de levage,
- déverrouillage (72) de moyens de verrouillage (325, 325-a, 325,b) d'une position de la potence de levage par rapport à la plateforme de levage,
- déplacement (73) de la potence de levage modifiant la position de la potence de levage par rapport à la plateforme de levage jusqu'à une position parmi un nombre prédéterminé de position et
- verrouillage (74) de moyens de verrouillage d'une position de la potence de levage par rapport à la plateforme de levage.

## Patentansprüche

1. Hubbühne (115), die in der Lage ist, sich entlang einer Schiene zu bewegen, und die Auflagemittel (365-a, 365-b), um auf der Schiene (105) installiert zu werden, und mindestens einen Hubbalken (310, 310-a, 310-b) umfasst, der an der Bühne angelenkt ist, **dadurch gekennzeichnet, dass** die Bühne umfasst:
- Mittel zum Verriegeln (325, 325-a, 325-b) einer Stellung jedes Hubbalkens in Bezug auf die Bühne, und
- Mittel zum Erfassen (315, 315-a, 315-b) der Stellung jedes Hubbalkens.

2. Bühne (115) nach Anspruch 1, die Mittel zum Steuern (350) der Bewegung der Bühne umfasst, wobei die Steuerung der Bewegung der Bühne von der Stellung jedes Hubbalkens (310, 310-a, 310-b) abhängt, die erfasst wurde.

3. Bühne (115) nach einem der Ansprüche 1 oder 2, wobei die Verriegelungsmittel (325, 325-a, 325-b) eine vorbestimmte Anzahl von Stellungen umfassen.

4. Bühne (115) nach Anspruch 3, wobei die Verriegelungsmittel (325, 325-a, 325-b) eine Fläche (535) umfassen, die konkave Erhebungen (525) umfasst, wobei die Anzahl von konkaven Erhebungen mindestens der vorbestimmten Anzahl von Stellungen entspricht, wobei jede Erhebung mindestens einer vorbestimmten Stellung entspricht, und einen Verriegelungszapfen (530), der dafür konfiguriert ist, sich in eine konkave Erhebung einzuschieben.

5. Bühne (115) nach einem der Ansprüche 1 bis 4, die Mittel zum Bewegen (320, 320-a, 320-b) des Hubbalkens (310, 310-a, 310-b) umfasst, die die Stellung eines Hubbalkens in Bezug auf die Bühne verändern.

6. Bühne (115) nach einem der Ansprüche 1 bis 5, wobei die Mittel zum Erfassen (315, 315-a, 315-b) der Stellung jedes Balkens (310, 310-a, 310-b) Mittel zum Erfassen der Stellung durch Induktion sind.

7. Bühne (115) nach einem der Ansprüche 1 bis 6, wobei die Bühne und die Auflagemittel (365-a, 365-b) mit mindestens einem Drehfreiheitsgrad angelenkt sind, der eine hydraulische Regelvorrichtung (40) umfasst, umfassend:
- mindestens einen Zylinder (220), der an der Bühne und den Auflagemitteln befestigt ist,
- mindestens einen hydraulischen Verteiler (265), der den Zylinder mit Hydraulikfluid speist,
- mindestens einen Neigungsmesser (245, 245-a, 245-b), der einen elektrischen Strom (250), welcher für eine Neigungsinformation der Bühne repräsentativ ist, an mindestens einen Automaten (255) überträgt,
- mindestens einen Automaten (255), der den hydraulischen Verteiler in Abhängigkeit von dem elektrischen Strom, der für die Neigungsinformation repräsentativ ist, steuert.

8. Verfahren (70) zum Ändern der Stellung von mindestens einem Hubbalken (310, 310-a, 310-b) einer Hubbühne, die Mittel zur Auflage (365-a, 365-b) auf einer Schiene (105) umfasst, wobei sich die Bühne entlang der Schiene bewegt, **dadurch gekennzeichnet, dass** es die folgenden Schritte umfasst:
- Erfassen (71) der Stellung des Hubbalkens,
- Entriegeln (72) der Mittel zum Verriegeln (325, 325-a, 325-b) einer Stellung des Hubbalkens in Bezug auf die Hubbühne,
- Bewegen (73) des Hubbalkens unter Verändern der Stellung des Hubbalkens in Bezug auf die Hubbühne bis zu einer Stellung aus einer vorbestimmten Anzahl von Stellungen, und
- Verriegeln (74) der Mittel zum Verriegeln einer Stellung des Hubbalkens in Bezug auf die Hubbühne.

## Claims

1. Lifting platform (115), capable of moving along a rail, and comprising bearing means (365-a, 365-b) for being installed on said rail (105), and at least one lifting beam (310, 310-a, 310-b) articulated with the platform, **characterised in that** said platform comprises:
- means (325, 325-a, 325-b) for locking a position of each lifting beam with respect to the platform, and
- means (315, 315-a, 315-b) for detecting the position of each lifting beam.

2. Platform (115) according to claim 1, which comprises means (350) for controlling the movement of the platform, the control of the movement of the platform depending on the position of each lifting beam (310, 310-a, 310-b) detected.

3. Platform (115) according to one of claims 1 or 2, wherein the locking means (325, 325-a, 325-b) comprise a predetermined number of positions.

4. Platform (115) according to claim 3, wherein the locking means (325, 325-a, 325-b) comprise a surface (535) comprising concave reliefs (525), the number of concave reliefs corresponding at least to the predetermined number of positions, each relief corresponding to at least one predetermined position, and a locking lug (530) configured to be inserted into a concave relief.

5. Platform (115) according to one of claims 1 to 4, which comprises means (320, 320-a, 320-b) for moving the lifting beam (310, 310-a, 310-b) modifying the position of a lifting beam with respect to the platform.

6. Platform (115) according to one of claims 1 to 5, wherein the means (315, 315-a, 315-b) for detecting the position of each lifting beam (310, 310-a, 310-b) are means for detecting the position by induction.

7. Platform (115) according to one of claims 1 to 6, wherein the platform and the bearing means (365-a, 365-b) are articulated by at least one degree of freedom in rotation, which comprises a hydraulic control device (40) comprising:
- at least one cylinder (220) fastened onto the platform and the bearing means,
- at least one hydraulic distributor (265) supplying the cylinder with hydraulic fluid,
- at least one inclinometer (245, 245-a, 245-b) transmitting an electric current (250) representative of a piece of information on inclination of the platform to at least one automaton (255),
- at least one automaton (255) controlling the hydraulic distributor according to the electric current representative of the inclination information.

8. Method (70) for modifying the position of at least one lifting beam (310, 310-a, 310-b) of a lifting platform comprising bearing means (365-a, 365-b) on a rail (105), the platform moving along the rail, **characterised in that** it comprises the following steps:
- detection (71) of the position of the lifting beam,
- unlocking (72) of means (325, 325-a, 325-b) for locking a position of the lifting beam with respect to the lifting platform,
- movement (73) of the lifting beam modifying the position of the lifting beam with respect to the lifting platform to one position out of a predetermined number of positions and
- locking (74) of means for locking a position of the lifting beam with respect to the lifting platform.
